# EUROPÄISCHE PATENTSCHRIFT

(11) **EP 1 586 419 B1**
(45) Veröffentlichungstag und Bekanntmachung des Hinweises auf die Patenterteilung: **30.09.2009**
(21) Anmeldenummer: 05006338.7
(22) Anmeldetag: 23.03.2005
(51) Int. Cl.: B25B 11/00

(54) **Flächengreifer**
Surface gripper
Dispositif de préhension de surface

(30) Priorität: 30.03.2004 DE 102004016637
(43) Veröffentlichungstag der Anmeldung: 19.10.2005
(73) Patentinhaber: J. Schmalz GmbH, 72293 Glatten (DE)
(72) Erfinder: Schmalz, Kurt, Dr., 72280 Dornstetten (DE); Rack, Alexander, 72250 Freudenstadt-Dietersweiler (DE); Schlieder, Bernd, 72293 Glatten (DE)
(74) Vertreter: Steimle, Josef

(56) Entgegenhaltungen:
- WO-A-01/62447
- DE-A1- 10 245 716
- PATENT ABSTRACTS OF JAPAN Bd. 011, Nr. 048 (M-561), 13. Februar 1987 (1987-02-13) -& JP 61 211243 A (AGENCY OF IND SCIENCE & TECHNOL), 19. September 1986 (1986-09-19)
- PATENT ABSTRACTS OF JAPAN Bd. 2003, Nr. 06, 3. Juni 2003 (2003-06-03) -& JP 2003 054774 A (MURATA MFG CO LTD), 26. Februar 2003 (2003-02-26)

## Beschreibung

Die Erfindung betrifft einen Flächengreifer zum Handhaben von Werkstücken mittels Unterdruck.

Der Flächengreifer weist einen an eine Unterdruckversorgung anschließbaren flächigen Grundkörper auf, an dessen dem Werkstück zugewandten Seite eine Unterdruckkammer ausgebildet ist und die Unterdruckkammer von einer Saugmatte verschlossen ist.

Es sind Flächengreifer bekannt (WO-A-01/62447), mit denen Werkstücke mit unterschiedlichen Konturen oder eine Vielzahl von Werkstücken gleichzeitig angesaugt werden können. Diese angesaugten Werkstücke können dann angehoben und an einen anderen Ort verbracht werden. Hierfür weist der Flächengreifer einen flächigen Grundkörper auf, an dessen dem Werkstück beziehungsweise den Werkstücken zugewandten Seite eine Saugmatte angeordnet ist. Durch diese Saugmatte hindurch wird Luft und somit das beziehungsweise die Werkstücke angesaugt. Die Saugmatte ist so konzipiert, dass sie einen Strömungswiderstand bildet, so dass der Unterdruck nicht zusammenbricht, wenn die Saugmatte nicht vollständig belegt ist.

Insbesondere bei porösen Werkstücken hat sich gezeigt, dass durch die Werkstücke hindurch Luft angesaugt wird, so dass insbesondere bei plattenförmigen Werkstücken nicht nur die oberste Platte sondern auch darunter angeordnete Platten angesaugt und mit abgehoben werden. Eine Vereinzelung der Platten ist mit einem derartigen Flächengreifer nicht mit Sicherheit möglich.

Der Erfindung liegt die Aufgabe zugrunde, einen Flächengreifer bereitzustellen, mit welchem dieses Problem gelöst wird.

Diese Aufgabe wird erfindungsgemäß mit einem Flächengreifer gelöst, der die Merkmale des Anspruchs 1 aufweist.

Beim erfindungsgemäßen Flächengreifer ist ein separater Kanal vorgesehen, in welchem ein anderer Druck als in der Unterdruckkammer herrschen kann. Dieser Kanal befindet sich innerhalb der Unterdruckkammer und mündet separat durch die Saugmatte aus. Dieser Kanal wird also in Richtung des anzusaugenden Werkstücks geführt. Wird diesem Kanal Druckluft zugeführt, dann kann diese Druckluft über die Saugmatte ausgeblasen werden, wohingegen im übrigen Bereich der Unterdruckkammer Luft über die Saugmatte angesaugt wird. Wird ein derartiger Flächengreifer auf poröse plattenförmige Werkstücke aufgesetzt, dann wird durch die poröse oberste Platte Druckluft geblasen, so dass sich zwischen der obersten Platte und der nachfolgenden Platte ein Luftkissen bildet. Dadurch werden diese beiden Platten voneinander getrennt. Die durch die oberste Platte hindurch angesaugte Luft wird dann diesem Luftkissen entnommen und es wird nicht mehr die nachfolgende Platte angesaugt. Hierdurch wird sichergestellt, dass auch bei porösen Platten lediglich die oberste Platte angesaugt und ergriffen wird.

Dabei ist vorgesehen, dass die Saugmatte einen den Kanal ins Freie fortsetzenden Durchbruch aufweist. Dieser Durchbruch ist insbesondere frei von Strömungswiderständen, so dass die Druckluft ungehindert in die oberste Platte eingeblasen werden kann. Hierdurch wird eine effektive Trennung der obersten Platte von der nachfolgenden Platte erzielt und es wird genügend Luft zwischen die beiden obersten Platten gedrückt, die dann anstelle der darunter liegenden Platte angesaugt werden kann.

Erfindungsgemäß mündet der Kanal in mehrere Durchbrüche aus. Hierdurch wird dem Umstand Rechnung getragen, dass bei großflächigen Platten das Luftkissen, welches sich unter einem einzigen Durchbruch ausbreitet, eventuell nicht ausreicht, um die oberste Platte von der nachfolgenden Platte zu trennen. Um dieser Gefahr vorzubeugen, sind mehrere Durchbrüche vorgesehen, die an den Kanal angeschlossen sind. Hierfür weist entweder die Saugmatte Verbindungskanäle zwischen den Durchbrüchen auf oder in der Grundplatte sind mehrere Auslässe vorgesehen, welche an die mehreren Durchbrüche angeschlossen sind.

Bei einer Fortbildung ist vorgesehen, dass der Kanal an eine Unterdruckversorgung oder an eine Druckluftquelle anschließbar ist. Das Ausblasen von Druckluft ist lediglich zum Anheben der obersten Platte erforderlich. Ist diese oberste Platte angehoben und von der nachfolgenden Platte getrennt, dann kann der Kanal entweder geschlossen oder an eine Unterdruckquelle angeschlossen werden. Eventuell kann hierdurch die Haltekraft, mit welcher die Platte vom Flächengreifer festgehalten wird, erhöht werden.

Um die Bildung eines Luftkissens zwischen der obersten und der nachfolgenden Platte zu unterstützen, weitet sich der Durchbruch nach außen kegelförmig auf. Durch die Kegelform des Durchbruches wird gewährleistet, dass sich das Luftkissen schnell ausbreitet und die Luft nicht durch die nachfolgende Platte hindurch geblasen wird.

Mit Vorzug ist der Durchbruch in einem Einsatz vorgesehen und ist der Einsatz auswechselbar in der Saugmatte angeordnet. Mit diesem Einsatz wird die Möglichkeit geschaffen, die Saugmatte an unterschiedliche Werkstücke anzupassen, insbesondere an Werkstücke mit unterschiedlicher Porosität.

Dabei können erfindungsgemäß die mehreren Durchbrüche gleichmäßig verteilt in der Saugmatte vorgesehen sein. Hierdurch wird ein großflächiges Luftkissen unterhalb der obersten Platte geschaffen, so dass diese mühelos angehoben werden kann.

Um Stillstandzeiten und Rüstzeiten kurz zu halten, ist die Saugmatte auswechselbar am Grundkörper befestigt und sind unterschiedliche Saugmatten mit verschiedenen, insbesondere verschieden angeordneten Durchbrüchen versehen. Auf diese Weise kann der Flächengreifer individuell an die zu ergreifenden Werkstücke angepasst werden, unabhängig davon, ob diese aus Metall, Kunststoff, Holz oder einem anderen Material bestehen und unabhängig davon, ob diese porös sind oder nicht. Das Auswechseln der Matten kann manuell oder maschinell erfolgen, wobei die Matten bevorzugt mittels eines Rastmechanismuses am Grundkörper befestigt sind.

Bei einer Weiterbildung kann der Kanal über ein Ventil geöffnet oder geschlossen werden. Außerdem ist der Luftstrom und/oder der Druck im Kanal steuerbar.

Weitere Vorteile, Merkmale und Einzelheiten der Erfindung ergeben sich aus den Ansprüchen sowie der nachfolgenden Beschreibung, in der unter Bezugnahme auf die Zeichnung ein besonders bevorzugtes Ausführungsbeispiel im Einzelnen beschrieben ist. Dabei können die in der Zeichnung dargestellten sowie in der Beschreibung und in den Ansprüchen erwähnten Merkmale jeweils einzeln für sich oder in beliebiger Kombination erfindungswesentlich sein.

In der Zeichnung zeigen:
- Figur 1: eine perspektivische Darstellung des Flächengreifers mit vom Grundkörper abgenommener Saugmatte;
- Figur 2: einen Schnitt II-II gemäß Figur 1 durch einen Einsatz; und
- Figur 3: eine perspektivische Aufsicht auf den Flächengreifer.

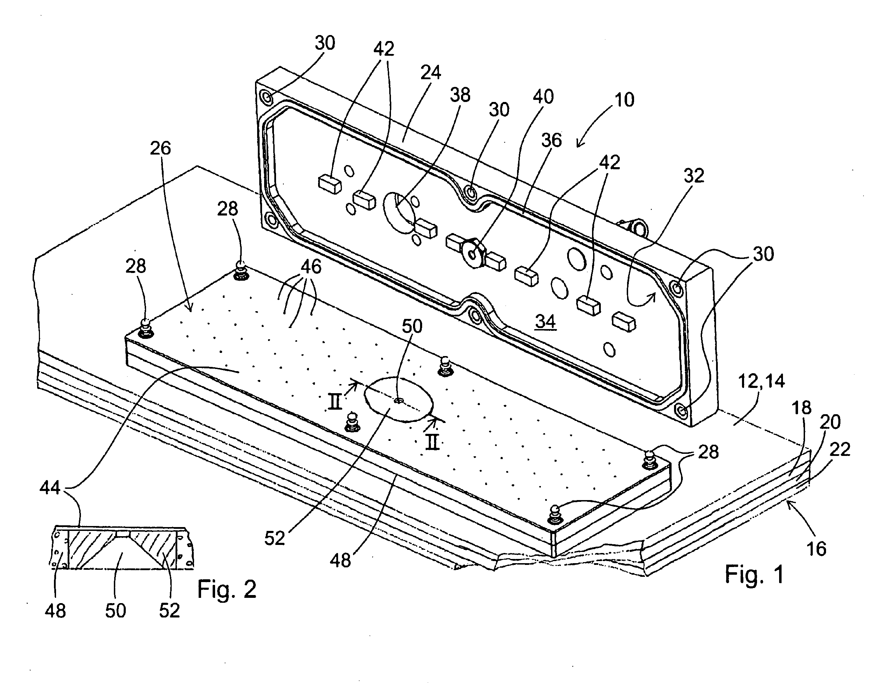

In der Figur 1 ist ein insgesamt mit 10 bezeichneter Flächengreifer dargestellt, mit dem ein Werkstück 12, welches beispielhaft als Platte 14 dargestellt ist, angesaugt und angehoben werden kann. Die mit dem Bezugszeichen 14 bezeichnete Platte ist die oberste Platte eines insgesamt mit 16 bezeichneten Plattenstapels, der aus mehreren Platten 18, 20, 22 und so weiter besteht.

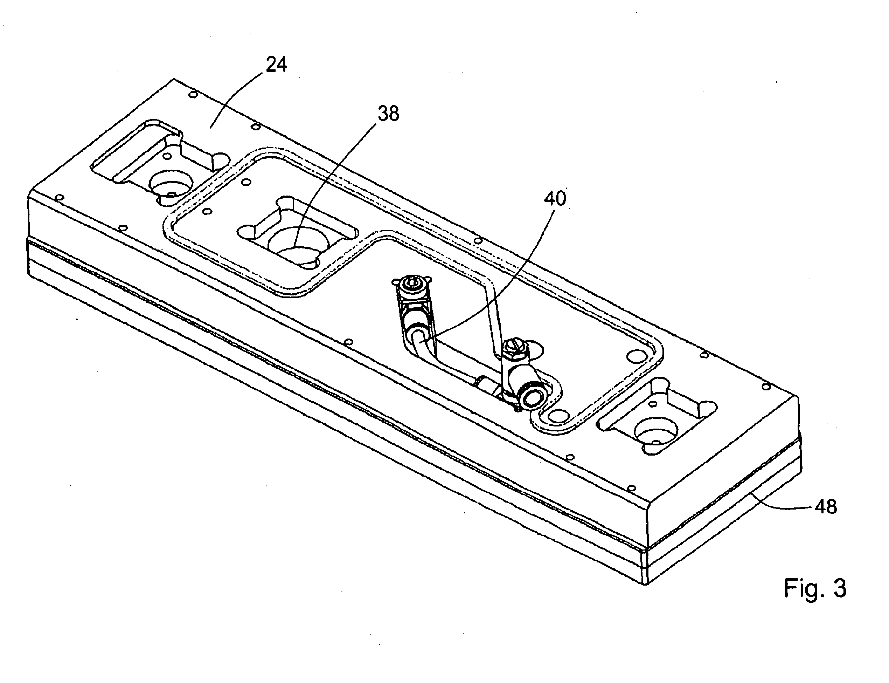

Der Flächengreifer 10 besitzt einen Grundkörper 24, an welchem, wie in Figur 3 dargestellt, eine Saugmatte 26 befestigt ist. Diese Saugmatte 26 weist Rastzapfen 28 auf, die in Rastaufnahmen 30 am Grundkörper 24 eingreifen. Auf diese Weise kann der Grundkörper 24 mit unterschiedlichen Saugmatten 26 beziehungsweise bei verschlissener Saugmatte 26 mit einer neuen bestückt werden.

Der Grundkörper 24 weist an seiner in der Handhabungslage dem Werkstück 12 zugewandten Seite 32 eine Unterdruckkammer 34 auf, die von einer Dichtung 36 umgeben ist. In die Unterdruckkammer 34 mündet ein Anschluss 38, welcher an eine nicht dargestellte Unterdruckversorgung angeschlossen werden kann. Außerdem mündet in die Unterdruckkammer 34 ein Kanal 40, welcher mit einer (nicht dargestellten) Druckluftquelle verbindbar ist. Als Unterdruckversorgung kann z.B. ein Ejektor diesen, der auf dem Grundkörper 24 aufsitzt. Außerdem sind in der Unterdruckkammer 34 noch mehrere Stützstege 42 vorgesehen, über welche die Saugmatte 26 auf Abstand zur Innenseite der Unterdruckkammer 34 gehalten wird.

Die Saugmatte 26 besitzt an ihrer dem Grundkörper 24 zugewandten Seite ein Saugblech 44, welches mit einer Vielzahl von Öffnungen 46 versehen ist, die einen Strömungswiderstand darstellen. Unterhalb des Saugbleches 44 befindet sich eine Matte 48 aus Schaumstoff, welche luftdurchlässig ist. Außerdem ist in der Figur 1 erkennbar, dass die Saugmatte 26 mit einem Durchbruch 50 versehen ist, der sich in einem Einsatz 52 befindet. Dieser Einsatz 52 ist im Schnitt II-II, der in Figur 2 dargestellt ist, wiedergegeben und es ist erkennbar, dass sich der Durchbruch 50 in Richtung auf die Unterseite der Saugmatte 26 kegelförmig öffnet.

Der Kanal 40 und der Durchbruch 50 sind so ausgerichtet, dass sie mit der Unterdruckkammer 34 nicht strömungsverbunden sind, so dass Druckluft, welche über den Kanal 40 zugeführt wird, in den Durchbruch 50 geleitet und an der Unterseite der Saugmatte 26 ausgeblasen wird. Diese Druckluft wird in die poröse Platte 14 eingeblasen, wobei die Platte 14 die oberste Platte des Plattenstapels 16 bildet. Dadurch wird zwischen der Platte 14 und der Platte 18 ein Luftkissen erzeugt, welches die Platte 14 von der Platte 18, das heißt vom Rest des Plattenstapels 16, trennt. Wird über den Anschluss 38 Luft angesaugt, dann wird mit der Saugmatte 26 die oberste Platte 14 angesaugt und ergriffen, und, da die Platte 14 porös ist, wird nicht die darunter liegende Platte 18 angesaugt, sondern es wird Luft aus dem zwischen der Platte 14 und der Platte 18 sich befindenden Luftkissen angesaugt.

Auf diese Weise wird gewährleistet, dass mit dem Flächengreifer 10 nur die oberste Platte 14 und nicht sondern mehrere Platten vom Plattenstapel 16 angesaugt und abgehoben werden. Durch Einstellung des Luftdruckes im Kanal 40 wird gezielt die Größe (Breite und Höhe) des Luftkissens bestimmt. Außerdem kann durch unterschiedliche Einsätze 52 die Form des Luftkissens bestimmt werden. Dabei kann die Aufweitung des Durchbruchs kegelförmig sein, es ist jedoch auch denkbar, dass sich der Durchbruch 50 sternförmig erweitert.

## Patentansprüche

1. Flächengreifer (10) zum Handhaben von Werkstücken (12) mittels Unterdruck, mit einem an eine Unterdruckversorgung anschließbaren flächigen Grundkörper (24), an dessen dem Werkstück (12) zugewandten Seite (32) eine von einer Saugmatte (26) verschlossene Unterdruckkammer (34) ausgebildet ist, wobei innerhalb der Unterdruckkammer (34) ein Kanal (40) vorgesehen ist, der unabhängig von der Unterdruckkammer (34) in die Saugmatte (26) ausmündet, die einen den Kanal (40) ins Freie fortsetzenden Durchbruch (50) aufweist, **dadurch gekennzeichnet, dass** der Kanal (40) in mehrere Durchbrüche (50) ausmündet, indem die Saugmatte (26) Verbindungskanäle zwischen den Durchbrüchen (50) aufweist oder im Grundkörper (24) mehrer Auslässe vorgesehen sind, welche an die mehreren Durchbrüche (50) angeschlossen sind.

2. Flächengreifer nach Anspruch 1, **dadurch gekennzeichnet, dass** der Kanal (40) an eine Unterdruckversorgung oder an eine Druckluftquelle anschließbar ist.

3. Flächengreifer nach einem der vorhergehenden Ansprüche, **dadurch gekennzeichnet, dass** der Durchbruch (50) frei von Strömungswiderständen ist.

4. Flächengreifer nach einem der vorhergehenden Ansprüche, **dadurch gekennzeichnet, dass** der Durchbruch (50) sich kegelförmig nach außen aufweitet.

5. Flächengreifer nach einem der vorhergehenden Ansprüche, **dadurch gekennzeichnet, dass** der Durchbruch (50) in einem Einsatz (52) vorgesehen ist und der Einsatz (52) auswechselbar in der Saugmatte (26) angeordnet ist.

6. Flächengreifer nach einem der vorhergehenden Ansprüche, **dadurch gekennzeichnet, dass** die mehreren Durchbrüche (50) gleichmäßig verteilt in der Saugmatte (26) vorgesehen sind.

7. Flächengreifer nach einem der vorhergehenden Ansprüche, **dadurch gekennzeichnet, dass** die Saugmatte (26) auswechselbar am Grundkörper (24) befestigt ist und unterschiedliche Saugmatten (26) mit verschieden angeordneten Durchbrüchen (50) versehen sind.

8. Flächengreifer nach einem der vorhergehenden Ansprüche, **dadurch gekennzeichnet, dass** der Kanal (40) über ein Ventil geöffnet oder geschlossen werden kann.

9. Flächengreifer nach einem der vorhergehenden Ansprüche, **dadurch gekennzeichnet, dass** der Luftstrom und/oder der Druck im Kanal (40) steuerbar ist.

## Claims

1. A surface gripper (10) for manipulating workpieces (12) by means of a vacuum, having a flat base body (24), which can be connected to a vacuum supply, on whose side (32) facing the workpiece (12) a vacuum chamber (34), which is closed off by a suction mat (26), is formed, wherein a conduit (40) is provided within the vacuum chamber (34), which terminates in the suction mat (26) independently of the vacuum chamber (34), and which has an opening (50), through which the conduit (40) continues to the outside, **characterized in that** the conduit terminates in several openings (50), **in that** the suction mat (26) has connecting channels between the openings (50), or that several outlets are provided in the base body (24), which are connected to the several openings (50).

2. The surface gripper in accordance with claim 1, **characterized in that** the conduit (40) can be connected to a vacuum supply device or to a compressed air source.

3. The surface gripper in accordance with one of the preceding claims, **characterized in that** the opening (50) is free of obstructions to flow.

4. The surface gripper in accordance with one of the preceding claims, **characterized in that** the opening (50) widens conically toward the outside.

5. The surface gripper in accordance with one of the preceding claims, **characterized in that** the opening (50) is provided in an insert (52), and the insert (52) is arranged in an exchangeable manner on the suction mat (26).

6. The surface gripper in accordance with one of the preceding claims, **characterized in that** the several openings (50) are evenly distributed in the suction mat (26).

7. The surface gripper in accordance with one of the preceding claims, **characterized in that** the suction mat (26) is fastened to the base body (24) in an exchangeable manner, and that different suction mats (26) with differently arranged openings (50) are provided.

8. The surface gripper in accordance with one of the preceding claims, **characterized in that** the conduit (40) can be opened or closed by means of a valve.

9. The surface gripper in accordance with one of the preceding claims, **characterized in that** the air flow and/or the pressure in the conduit (40) are controllable.

## Revendications

1. Dispositif de préhension plan (10) pour la manipulation de pièces (12) au moyen d'une dépression, comportant un corps de base (24) plan, qui est apte à être raccordé à une alimentation en dépression et dont la face (32), orientée vers la pièce (12), comporte une chambre de dépression (34) fermée par une nappe d'aspiration (26), sachant qu'à l'intérieur de la chambre de dépression (34) est prévu un conduit (40) qui, indépendamment de la chambre de dépression (34), débouche dans la nappe d'aspiration (26) qui comporte un passage (50) par lequel le conduit (40) se prolonge vers l'espace extérieur, **caractérisé en ce que** le conduit (40) débouche dans plusieurs passages (50), du fait que la nappe d'aspiration (26) comporte des conduits de liaison entre les passages (50) ou que plusieurs sorties sont prévues dans le corps de base (24), lesquelles sont raccordées à la pluralité de passages (50).

2. Dispositif de préhension plan selon la revendication 1, **caractérisé en ce que** le conduit (40) peut être raccordé à une alimentation en dépression ou à une source d'air comprimé.

3. Dispositif de préhension plan selon l'une quelconque des revendications précédentes, **caractérisé en ce que** le passage (50) est exempt de résistances à l'écoulement.

4. Dispositif de préhension plan selon l'une quelconque des revendications précédentes, **caractérisé en ce que** le passage (50) s'élargit en forme de cône vers l'extérieur.

5. Dispositif de préhension plan selon l'une quelconque des revendications précédentes, **caractérisé en ce que** le passage (50) est prévu dans un insert (52) et ledit insert (52) est agencé de manière amovible dans la nappe d'aspiration (26).

6. Dispositif de préhension plan selon l'une quelconque des revendications précédentes, **caractérisé en ce qu'**il est prévu de répartir uniformément la pluralité de passages (50) dans la nappe d'aspiration (26).

7. Dispositif de préhension plan selon l'une quelconque des revendications précédentes, **caractérisé en ce que** la nappe d'aspiration (26) est fixée de manière amovible sur le corps de base (24) et des nappes d'aspiration (26) différentes sont munies de passages (50) disposés différemment.

8. Dispositif de préhension plan selon l'une quelconque des revendications précédentes, **caractérisé en ce que** le conduit (40) peut être fermé et ouvert par l'intermédiaire d'une soupape.

9. Dispositif de préhension plan selon l'une quelconque des revendications précédentes, **caractérisé en ce que** le flux d'air et/ou la pression dans le conduit (40) peuvent être commandés.
